# EUROPEAN PATENT SPECIFICATION

(11) **EP 2 446 744 B1**
(45) Date of publication and mention of the grant of the patent: **07.12.2016**
(21) Application number: 11186963.2
(22) Date of filing: 27.10.2011
(51) Int. Cl.: A21C 3/06, A21C 7/01, A21C 9/04

(54) **Device and method for spreading decoration material on a dough product**
Vorrichtung und Verfahren zum Streuen von Dekorationsmaterial auf einem Teigprodukt
Dispositf et procédé de distribution de matériau décoratif sur en produit à base de pâte

(30) Priority: 01.11.2010 NL 2005609
(43) Date of publication of application: 02.05.2012
(73) Proprietor: Bakkersland IP B.V., 5321 JV Hedel (NL)
(72) Inventor: Van Strien, Cor, 4533 GK Terneuzen (NL)
(74) Representative: Eveleens Maarse, Pieter

(56) References cited:
- EP-A1- 0 670 115
- DE-U1- 29 619 530
- FR-A1- 2 500 266
- FR-A1- 2 806 257
- NL-A- 8 204 931

## Description

The present invention relates to a device and method for arranging decoration material on a dough product, preferably bread.

In the production of dough products, such as for instance bread, it has become increasingly more important to provide the dough products with decoration material. In the case of most dough products the decoration material consists of solid, edible particles such as nuts, seeds, currants, raisins, olives, sugar, salt, sugar decoration, combinations or parts thereof. It is however also possible to envisage the decoration material comprising a liquid or viscous substance, optionally with solid particles therein.

Arranging the decoration material on the dough products, such as bread, gives the dough product a more attractive appearance and/or taste. An example hereof is for instance bread which is provided with nuts, sesame seeds, poppy seeds or sunflower seeds.

Arranging decoration material on dough products on industrial scale is however relatively complicated and labour-intensive. A number of methods are currently used to arrange decoration material on dough products. The most commonly used method is to sprinkle the decoration material, during transport under the stationary upper conveyor belt (a so-called stretching belt or pressing belt), onto the lower conveyor belt (stretching belt), wherein the decoration material is pressed into the dough product. Owing to the high capacity of about 2400 to 4000 loaves of bread per hour, the speed of the lower conveyor belt with the dough product thereon is relatively high. Due to this relatively high speed much of the decoration material will rebound away and spread over the machine and in the vicinity thereof. In addition, the quantity of decoration material which can be added is limited due to the high speed and the smooth lower conveyor belt. This is because, if the quantity is too great, slippage also results between the dough product and the conveyor belts.

A relatively large amount of decoration material is further required because part thereof does not come to lie on the dough product. This results in increased production costs. All the decoration material which has rebounded away must also be cleaned up. Particularly when the decoration material comprises seeds or nuts, it is important that, when a switch is made to producing dough products which may not comprise any seeds or nuts, the whole machine and the vicinity thereof are thoroughly cleaned. If this is not done properly, there is then a chance of nuts and seeds ending up in the dough products anyway. People allergic to seeds or nuts may then unintentionally come into contact therewith and become ill. Such an extensive cleaning takes a great deal of time and results in a considerable increase in production costs.

DE 29619530 U1 discloses a device for arranging decoration material on a dough product, whereby a slab of dough is rolled and provided with decoration material while being transported on a belt conveyor.

Another way in which the decoration material can be arranged on the dough product is manually. The dough product is then grasped manually and pressed into the decoration material. The dough product is optionally first provided with an adhesive and then pressed into the decoration material. Because arranging of the decoration material is done manually, the production costs are relatively high.

An object of the present invention is therefore to provide a device and method for decorating dough products such as bread, with which the above stated and other problems can be avoided.

A first aspect of the present invention relates to a device for arranging decoration material on a dough product, comprising: means for forming a slab of dough, a first conveyor at a speed v₁ for transporting the formed slab of dough along roll-up means for the purpose of rolling up the slab of the dough, which roll-up means are situated in the path of the first conveyor, and a second conveyor at a speed v₂ for transporting the rolled-up slab of dough, wherein means are provided in the vicinity of the second conveyor for arranging decoration material on the rolled-up slab of dough, and wherein the speed v₂ of the second conveyor is lower than the speed v₁ of the first conveyor. Making use of the above described device in decorating dough products prevents much of the decoration material rebounding away. The decorating does after all take place on a conveyor having a lower speed than a usual conveyor. The speed of the second conveyor can be lower than that of the first because the slab of dough is rolled up, so the dough products have become less long, whereby the same quantity of product can be transported at a lower speed of the conveyor. By making use of the above stated device it is no longer necessary, when there is a change of dough product, such as to making another type of bread, to fully clean the whole machine and vicinity thereof of decoration material which has rebounded away. Less decoration material need also be used.

In order to further limit the loss of decoration material it is recommended to provide at least a part of the second conveyor with a protective cover. This protective cover at least partially encloses the second conveyor and ensures that, if decoration material were still to rebound away, it is collected.

It is further recommended to give the second conveyor, and the sprinkling means in the vicinity thereof, a modular form. It is possible in this way to separate the second conveyor and/or the sprinkling means from the first conveyor.

The speed v₁ of the first conveyor is preferably chosen such that the device reaches a capacity of between 2400 and 4000 dough products per hour. According to an embodiment of the present invention, the length of a slab of dough formed for instance by means of rolling is between 25 and 40 cm. Having passed through the roll-up means, the length is reduced to between for instance 10 and 15 cm, in other words: the slab of dough has become a rolled-up slab of dough (also referred to as dough round) of a determined size and weight which depends on the size and weight of the dough material from which it is made. Owing to this reduction in length the speed of the conveyor can be reduced without this affecting the capacity of the device. The decrease is such that the speed v₁ is preferably about 1.5 times greater than v₂, preferably 2 times greater, most preferably about 2.5 times greater.

It is recommended that both the first and/or the second conveyor comprise driven conveyor belts. These latter are preferably manufactured from stainless steel or a plastic which is easy to clean.

In order to ensure that the dough product does not slide easily off the conveyor, it is recommended to provide the conveyor belts of the second conveyor with a relief. This relief preferably comprises ribs extending transversely of the longitudinal direction of the conveyor belts. In addition to the fact that the dough product slides less easily off the conveyor belts due to such a relief being arranged, part of the decoration material remains lying on the belt. If a dough product is laid thereon, the decoration material will be pressed into the dough product by a slight pressing by the second upper conveyor. If such ribs were not present, the decoration material could accumulate and not be pressed uniformly into the product, and the ribs also provide for a control of the time the piece of dough remains in the second conveyor. This results in control of the decorating process.

In a recommended embodiment shaping means are placed above a part of the first and/or second conveyor for the purpose of improving the shape of the rolled-up slab of dough. The shaping means assist in making the dough product into a desired shape. It is also possible for the shaping means to provide the dough product with a determined relief so that it acquires a more attractive appearance. A part of the shaping means can also be provided for this purpose with a relief.

It is particularly recommended that the shaping means comprise a plate or an endless belt, which belt moves at a speed which is lower than v₁ or v₂, or moves in opposite direction to the first or second conveyor. Because the shaping means are stationary, slower or move in opposite direction to the conveyor, the rolled-up dough product will tend to start to roll. This rolling improves the shape of the dough product.

In order to arrange the decoration material on the dough products use is preferably made of sprinkling means. These sprinkling means can take the form of a funnel with a controllable valve which is arranged above the second conveyor. Depending on the speed of the second conveyor, an operator can then control the valve of the funnel such that the desired quantity of decoration material is arranged on the rolled-up dough products. This control preferably takes place fully automatically.

The means for arranging the decoration material are preferably suitable for arranging nuts, seeds, sugar, salt and sugar decoration or grain flakes.

A second aspect of the present invention relates to a method for arranging decoration material on a dough product, comprising the steps of providing dough material, forming a slab of dough from the dough material, transporting the slab of dough along roll-up means via a first conveyor having a speed v₁, rolling up the slab of dough using the roll-up means and further transporting the rolled-up slab of dough with a second conveyor having a speed v₂, wherein the speed v₂ is lower than the speed v₁, and wherein the rolled-up slab of dough is provided with decoration material in the vicinity of the second conveyor.

It is recommended that the first and/or second conveyor comprise conveyor belts. These latter are preferably manufactured from stainless steel or plastic which is easy to clean.

It is further recommended that the shape of the rolled-up slab of dough is improved. This preferably takes place with so-called shaping means. These shaping means preferably comprise a plate or an endless belt, which belt moves at a speed lower than v₁ or v₂ or moves in opposite direction to the first or second conveyor.

Arranging of decoration material on the rolled-up slab of dough preferably takes place using sprinkling means.

A third aspect of the present invention relates to the use of the above stated device in the making of bread.

Mentioned and other features of the present invention and method will be elucidated hereinbelow with reference to figures which are given only by way of example and without the invention being deemed limited thereby. In the figures:
Figure 1 is a schematic view of an embodiment of the device according to the present invention;
Figure 2 is a schematic top view of a part of the conveyor belt of the device of Figure 1; and
Figure 3 is a view of a loaf of bread made using the device of Figure 1.

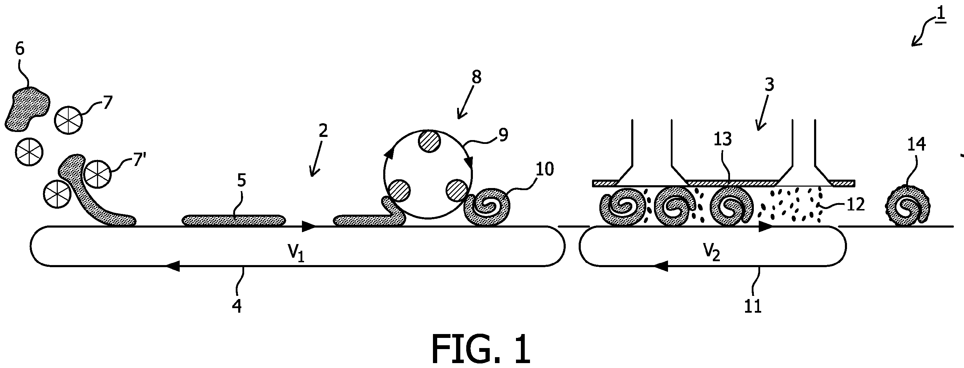

Figure 1 shows a view of a device 1 for making and providing bread with decoration material. Device 1 comprises a first conveyor 2 and a second conveyor 3. First conveyor 2 comprises a conveyor belt 4 which moves in the direction of the arrow at a speed v₁. Means for forming a slab of dough 5 are provided in the vicinity of first conveyor 2. Such a slab of dough is obtained by guiding a lump of dough 6 along one or more rollers 7, 8. These rollers 7, 8 roll the clump of dough into a slab of dough. The formed slab of dough is deposited on conveyor belt 4. After being displaced over a determined distance, the slab of dough is brought into contact with roll-up means 8. The shown roll-up means 8 comprise an endless belt 9 which rotates such that the slab of dough is rolled up to form a rolled-up slab of dough 10. Once the slab of dough has been rolled up, it is transferred to a second conveyor belt 11. This second conveyor belt 11 moves at a speed v₂. This speed v₂ of the second conveyor belt is lower than the speed v₁ of the first conveyor belt. The rolled-up slab of dough is provided with decoration material 12 after the rolled-up slab of dough has been placed on the second conveyor belt. This decoration material is arranged on the conveyor belt and the rolled-up slab of dough via sprinkling means 13 and 14. Further arranged above second conveyor 3 is a plate 13 which ensures that the rolled-up slab of dough starts to rotate. The effect of this plate 13 is twofold. Firstly, the rolled-up slab of dough is provided with decoration material over its whole periphery due to the rotation. Secondly, the slab of dough obtains a better shape due to the rotation. Both effects contribute toward the appearance of the shaped dough roll provided with decoration material.

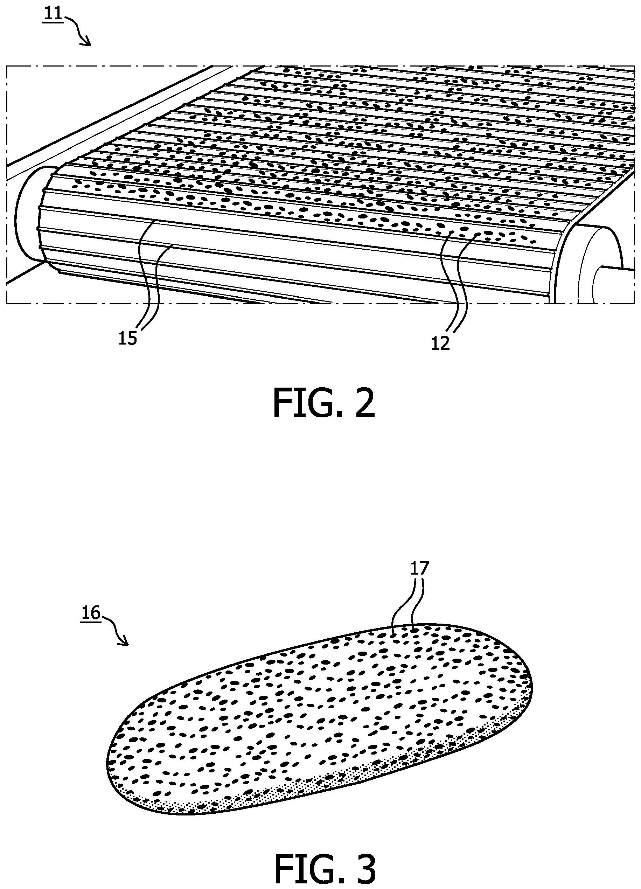

Figure 2 shows in detail the conveyor belt 11 of device 1 of Figure 1. Conveyor belt 11 is manufactured from plastic and provided with ribs 15 extending in the transverse direction of conveyor belt 11. Decoration material 12 is present between ribs 11. Decoration material 12 is pressed into the dough under the own weight of the rolled-up slab of dough. Means can optionally also be arranged for applying an adhesive to the slab of dough.

Figure 3 shows a loaf of bread 16 made using the present invention. The whole surface of the loaf is provided with decoration material 17, in this case poppy seeds.

## Claims

1. Device for arranging decoration material on a dough product, comprising: means for forming a slab of dough, a first conveyor at a speed v₁ adapted to transport the formed slab of dough along roll-up means for the purpose of rolling up the slab of the dough, which roll-up means are situated in the path of the first conveyor, and a second conveyor at a speed v₂ adapted to transport the rolled-up slab of dough, wherein means are provided in the vicinity of the second conveyor for arranging decoration material on the rolled-up slab of dough, wherein the conveyors are adapted so that during use the speed v₂ of the second conveyor is lower than the speed v₁ of the first conveyor.

2. Device as claimed in claim 1, wherein the first conveyor and/or the second conveyor are conveyor belts.

3. Device as claimed in claim 2, wherein the conveyor belt of the second conveyor is provided with a relief, preferably ribs extending transversely of the longitudinal direction of the conveyor belt.

4. Device as claimed in any of the claims 1-3, wherein shaping means are placed above at least a part of the first and/or second conveyor for the purpose of improving the shape of the rolled-up slab of dough.

5. Device as claimed in claim 4, wherein the shaping means comprise a plate or an endless belt, which belt moves at a speed which is lower than v₁ or v₂, or moves in opposite direction to the first or second conveyor.

6. Device as claimed in any of the claims 1-5, wherein the means for arranging the decoration material comprise sprinkling means for sprinkling the decoration material over the rolled-up slab of dough.

7. Device as claimed in any of the claims 1-6, wherein the means for arranging the decoration material are adapted to arrange seeds, nuts, sugar, salt, sugar decoration and grain flakes.

8. Device as claimed in any of the claims 1-7, wherein the speed v₁ is at least 1.5 times greater than v₂, preferably 2 times greater and most preferably about 2.5 times greater.

9. Method for arranging decoration material on a dough product, comprising of:
- providing dough material;
- forming a slab of dough from the dough material;
- transporting the slab of dough along roll-up means via a first conveyor at a speed v₁;
- rolling up the slab of dough using the roll-up means; and
- further transporting the rolled-up slab of dough with a second conveyor at a speed v₂, wherein the speed v₂ is lower than the speed v₁, and wherein the rolled-up slab of dough is provided with decoration material in the vicinity of the second conveyor.

10. Method as claimed in claim 9, wherein the first conveyor and/or the second conveyor are conveyor belts.

11. Method as claimed in claim 9 or 10, wherein after the slab of dough has been rolled up the shape thereof is improved by means of shaping means.

12. Method as claimed in claim 11, wherein the shaping means comprise an endless belt, which belt moves at a speed lower than v₁ or v₂ or moves in opposite direction to the first or second conveyor.

13. Method as claimed in any of the claims 9-12, wherein at least a part of the decoration material is arranged on the rolled-up slab of dough by means of sprinkling means.

14. Method as claimed in any of the claims 9-13, wherein the speed v₁ is at least 1.5 times greater than v₂, preferably 2 times greater and most preferably about 2.5 times greater.

15. Use of a device as claimed in any of the claims 1-9 in the making of bread.

## Patentansprüche

1. Vorrichtung zum Anordnen von Dekorationsmaterial auf einem Teigprodukt, umfassend: Mittel zur Bildung einer Teigplatte, ein erstes Fördermittel mit einer Geschwindigkeit v₁, das für den Transport der geformten Teigplatte entlang Aufrollmitteln zum Aufrollen der Teigplatte ausgelegt ist, wobei die Aufrollmittel im Weg des ersten Fördermittels angeordnet sind, und ein zweites Fördermittel mit einer Geschwindigkeit v₂, das für den Transport der aufgerollten Teigplatte ausgelegt ist, wobei Mittel in der Nähe des zweiten Fördermittels zur Anordnung von Dekorationsmaterial auf der aufgerollten Teigplatte vorgesehen sind, wobei die Fördermittel so ausgelegt sind, dass im Gebrauch die Geschwindigkeit v₂ des zweiten Fördermittels geringer als die Geschwindigkeit v₁ des ersten Fördermittels ist.

2. Vorrichtung nach Anspruch 1, wobei das erste Fördermittel und/oder das zweite Fördermittel Förderbänder sind.

3. Vorrichtung nach Anspruch 2, wobei das Förderband des zweiten Fördermittels mit einem Relief versehen ist, vorzugsweise Rippen, die sich quer zur Längsrichtung des Förderbands erstrecken.

4. Vorrichtung nach einem der Ansprüche 1-3, wobei Formungsmittel über wenigstens einem Teil des ersten und/oder zweiten Fördermittels platziert sind, um die Form der aufgerollten Teigplatte zu verbessern.

5. Vorrichtung nach Anspruch 4, wobei die Formungsmittel eine Platte oder ein Endlosband umfassen, wobei sich das Band mit einer Geschwindigkeit bewegt, die geringer als v₁ oder v₂ ist, oder sich in eine entgegengesetzte Richtung zum ersten oder zweiten Fördermittel bewegt.

6. Vorrichtung nach einem der Ansprüche 1-5, wobei die Mittel zur Anordnung des Dekorationsmaterials Streumittel zum Streuen des Dekorationsmaterials über die aufgerollte Teigplatte umfassen.

7. Vorrichtung nach einem der Ansprüche 1-6, wobei die Mittel zur Anordnung des Dekorationsmaterials dazu ausgelegt sind, Körner, Nüsse, Zucker, Salz, Zuckerdekoration und Getreideflocken anzuordnen.

8. Vorrichtung nach einem der Ansprüche 1-7, wobei die Geschwindigkeit v₁ mindestens 1,5 Mal so groß wie v₂, vorzugsweise 2 Mal so groß und besonders bevorzugt 2,5 Mal so groß ist.

9. Verfahren zur Anordnung von Dekorationsmaterial auf einem Teigprodukt, umfassend:
- Bereitstellen von Teigmaterial;
- Formen einer Teigplatte aus dem Teigmaterial;
- Transportieren der Teigplatte entlang Aufrollmitteln über ein erstes Fördermittel mit einer Geschwindigkeit v₁;
- Aufrollen der Teigplatte unter Verwendung der Aufrollmittel; und
- weiteres Transportieren der aufgerollten Teigplatte mit einem zweiten Fördermittel mit einer Geschwindigkeit v₂, wobei die Geschwindigkeit v₂ geringer als die Geschwindigkeit v₁ ist, und wobei die aufgerollte Teigplatte in der Nähe des zweiten Fördermittels mit Dekorationsmaterial versehen wird.

10. Verfahren nach Anspruch 9, wobei das erste Fördermittel und/oder das zweite Fördermittel Förderbänder sind.

11. Verfahren nach Anspruch 9 oder 10, wobei die Form der Teigplatte nach dem Aufrollen mit Formungsmitteln verbessert wird.

12. Verfahren nach Anspruch 11, wobei die Formungsmittel ein Endlosband umfassen, wobei sich das Band mit einer Geschwindigkeit bewegt, die geringer als v₁ oder v₂ ist, oder sich in eine entgegengesetzte Richtung zum ersten oder zweiten Fördermittel bewegt.

13. Verfahren nach einem der Ansprüche 9-12, wobei wenigstens ein Teil des Dekorationsmaterials mit Streumitteln auf der aufgerollten Teigplatte angeordnet wird.

14. Verfahren nach einem der Ansprüche 9-13, wobei die Geschwindigkeit v₁ mindestens 1,5 Mal so groß wie v₂, vorzugsweise 2 Mal so groß und besonders bevorzugt 2,5 Mal so groß ist.

15. Verwendung einer Vorrichtung in einem der Ansprüche 1-9 bei der Herstellung von Brot.

## Revendications

1. Dispositif pour placer une matière de décoration sur un produit à base de pâte, comprenant : un moyen pour former une plaque de pâte, un premier convoyeur à une vitesse v₁ apte à transporter la plaque formée de pâte le long de moyens d'enroulement dans le but d'enrouler la plaque de pâte, ces moyens d'enroulement étant situés sur le trajet du premier convoyeur, et un second convoyeur à une vitesse v₂ apte à transporter la plaque enroulée de pâte, dans lequel des moyens sont disposés au voisinage du second convoyeur pour placer une matière de décoration sur la plaque enroulée de pâte,
dans lequel les convoyeurs sont conçus de telle sorte que pendant leur utilisation la vitesse v₂ du second convoyeur est inférieure à la vitesse v₁ du premier convoyeur.

2. Dispositif selon la revendication 1, dans lequel le premier convoyeur et/ou le second convoyeur sont des courroies transporteuses.

3. Dispositif selon la revendication 2, dans lequel la courroie transporteuse du second convoyeur est pourvue de reliefs, de préférence des nervures s'étendant transversalement par rapport à la direction longitudinale de la courroie transporteuse.

4. Dispositif selon l'une quelconque des revendications 1 à 3, dans lequel des moyens de mise en forme sont placés au-dessus d'au moins une partie du premier et/ou du second convoyeur dans le but d'améliorer la forme de la plaque enroulée de pâte.

5. Dispositif selon la revendication 4, dans lequel les moyens de mise en forme comprennent une plaque ou une courroie sans fin, laquelle courroie se déplace à une vitesse qui est inférieure à v₁ ou v₂ ou bien se déplace dans le sens opposé à celui du premier ou du second convoyeur.

6. Dispositif selon l'une quelconque des revendications 1 à 5, dans lequel les moyens pour placer la matière de décoration comprennent des moyens de saupoudrage pour saupoudrer la matière de décoration sur la plaque enroulée de pâte.

7. Dispositif selon l'une quelconque des revendications 1 à 6, dans lequel les moyens pour placer la matière de décoration sont aptes à mettre en place des graines, des noix, du sucre, du sel, des décorations en sucre et des flocons de céréales.

8. Dispositif selon l'une quelconque des revendications 1 à 7, dans lequel la vitesse v₁ est au moins 1,5 fois supérieure à v₂, de préférence 2 fois supérieure et idéalement environ 2,5 fois supérieure.

9. Procédé pour placer une matière de décoration sur un produit à base de pâte, comprenant les opérations consistant à :
- approvisionner de la pâte en vrac ;
- former une plaque de pâte à partir de la pâte en vrac ;
- transporter la plaque de pâte le long de moyens d'enroulement à l'aide d'un premier convoyeur à une vitesse v₁ ;
- enrouler la plaque de pâte à l'aide des moyens d'enroulement ; et
- continuer à transporter la plaque enroulée de pâte avec un second convoyeur à une vitesse v₂, dans lequel la vitesse v₂ est inférieure à la vitesse v₁, et dans lequel la plaque enroulée de pâte est pourvue d'une matière de décoration au voisinage du second convoyeur.

10. Procédé selon la revendication 9, dans lequel le premier convoyeur et/ou le second convoyeur sont des courroies transporteuses.

11. Procédé selon la revendication 9 ou 10, dans lequel, après que la plaque de pâte a été enroulée, sa forme est améliorée à l'aide de moyens de mise en forme.

12. Procédé selon la revendication 11, dans lequel les moyens de mise en forme comprennent une courroie sans fin, laquelle courroie se déplace à une vitesse inférieure à v₁ ou v₂ ou bien se déplace dans le sens opposé à celui du premier ou du second convoyeur.

13. Procédé selon l'une quelconque des revendications 9 à 12, dans lequel au moins une partie de la matière de décoration est placée sur la plaque enroulée de pâte à l'aide de moyens de saupoudrage.

14. Procédé selon l'une quelconque des revendications 9 à 13, dans lequel la vitesse v₁ est au moins 1,5 fois supérieure à v₂, de préférence 2 fois supérieure et idéalement environ 2,5 fois supérieure.

15. Utilisation d'un dispositif selon l'une quelconque des revendications 1 à 9 dans la fabrication du pain.
